# EUROPEAN PATENT APPLICATION

(11) **EP 4 501 747 A1**
(43) Date of publication of application: **05.02.2025**
(21) Application number: 23774460.2
(22) Date of filing: 03.03.2023
(51) Int. Cl.: B62D 12/00, G05D 1/02

(54) **ARTICULATED VEHICLE**

(30) Priority: 24.03.2022 JP 2022047809
(71) Applicant: Hitachi Construction Machinery Co., Ltd., Tokyo 110-0015 (JP)
(72) Inventor: KASAI Shinya, Tokyo 100-8280 (JP); MORIKI Hidekazu, Tsuchiura-shi, Ibaraki 300-0013 (JP); SEKINE Kazuya, Tsuchiura-shi, Ibaraki 300-0013 (JP); NAKANO Hisami, Tsuchiura-shi, Ibaraki 300-0013 (JP); ICHINOSE Masanori, Tokyo 100-8280 (JP); TSUKADA Youko, Tokyo 100-8280 (JP)
(74) Representative: MERH-IP Matias Erny Reichl Hoffmann Patentanwälte PartG mbB
(86) International application number: PCT/JP2023/008140
(87) International publication number: WO 2023/181861

(57) **Abstract**

An articulated vehicle comprising a control device for controlling the operation of the articulated vehicle, which includes a front frame and a rear frame pivotally connected to allow rotation in the left and right directions. The control device sets a reference point for the articulated vehicle on a line that runs vertically to the axle and in the front-rear direction through the center of the left and right sides of the axle of the wheel of the frame on the side of the direction of travel, either on the axle or on the side of the direction of travel further than the axle. It also calculates the position of the reference point at the work site, and based on the predetermined target trajectory as the travel trajectory of the articulated vehicle and the position of the reference point at the work site, it calculates the steering control amount, which is the amount of bending of the front frame relative to the rear frame. This allows for improved tracking accuracy to the target path while suppressing meandering.

## Description

### Technical Field

The present invention relates to articulated vehicles.

### Background Art

Conventionally, articulated vehicles have been used at construction sites, etc., but due to reasons such as a shortage of operators, there is an increasing demand for the autonomous operation of articulated vehicles. For the widespread adoption of autonomous driving of articulated vehicles, non-meandering route following performance is required from the perspectives of fuel efficiency and cycle time.

As a technology aimed at suppressing meandering with respect to the target travel route in the autonomous driving of articulated vehicles, for example, the one described in Patent Literature 1 is known. Patent Literature 1 discloses an autonomous driving controller for controlling a construction machine that autonomously travels, which outputs a control signal to correct the direction of travel of the construction machine to approach the travel reference line when the distance from the travel reference line to the construction machine is greater than a predetermined first threshold, and outputs a control signal to make the direction of travel of the construction machine parallel to the travel reference line when the distance from the travel reference line to the construction machine becomes smaller than the second threshold, which is the same as or smaller than the first threshold.

### Citation List

### Patent Literature

Patent Literature 1: JP 2017-204089 A

### Summary of Invention

### Technical Problem

However, in the conventional technology, it is conceivable that the reference point of the self-position may be behind the center of the axle of the frame on the front side in the direction of travel, even in front of the bending part. Therefore, in articulated vehicles which the rear vehicle follows the frame on the front side in the direction of travel, there is a problem that steering control intervention is delayed against deviation from the target route, resulting in meandering. Moreover, it attempts to maintain the direction of the vehicle body parallel to the target travel route. However, since errors in the position of the vehicle body relative to the target travel route are allowed within the permissible range of position deviation, there is room for improvement in the following accuracy to the target route.

The present invention has been made in view of the above, and aims to provide an articulated vehicle that can improve the following accuracy to the target route while suppressing meandering.

### Solution to Problem

The present application includes several means to solve the above problem, and as an example, it relates to an articulated vehicle equipped with a front frame having a pair of left and right wheels and a rear frame having a pair of left and right wheels, which is rotatably connected to the front frame in the left and right direction, comprising a self-position sensor that detects the position at the work site, and a controller that controls the operation of the articulated vehicle. The controller sets the reference point of the articulated vehicle on a straight line that passes vertically through the axle of the wheels of the frame on the side in the direction of travel, either on the axle or on the side in the direction of travel from the axle, calculates the position of the reference point at the work site based on the detection result of the self-position sensor, and calculates the steering control amount, which is the bending amount of the front frame relative to the rear frame, based on the predetermined target trajectory as the travel trajectory of the articulated vehicle and the position of the reference point at the work site.

### Advantageous Effects of Invention

According to the present invention, it is possible to suppress meandering while improving the accuracy of following the target path.

### Brief Description of Drawings

FIG.1 is a side view schematically showing a wheel loader.
FIG.2 is a top view schematically showing a wheel loader.
FIG.3 is a diagram showing a travel drive system of the wheel loader together with a controller and related configurations.
FIG.4 is a functional block diagram showing the functions of an autonomous driving controller according to a first embodiment, together with related configurations.
FIG.5 is a diagram showing an example of setting reference points on the vehicle body, and shows an example of setting reference points during forward movement.
FIG.6 is a diagram showing an example of setting reference points on the vehicle body, and shows an example of setting reference points during backward movement.
FIG.7 is a functional block diagram showing the functions of an autonomous driving controller according to a second embodiment, together with related configurations.
FIG.8 is a flowchart showing the processing contents of the reference point switching section.
FIG.9 is a flowchart showing the processing contents of the reference point correction amount calculation section.
FIG.10 is a functional block diagram showing the functions of an autonomous driving controller according to a third embodiment, together with related configurations.
FIG.11 is a flowchart showing the processing contents of the reference point switching section.
FIG.12 is a functional block diagram showing the functions of an autonomous driving controller according to a fourth embodiment, together with related configurations.
FIG.13 is a flowchart showing the processing contents of the target position calculation section.
FIG.14 is a flowchart showing the processing contents of the reference point switching section.
FIG.15 is a flowchart showing the processing contents of the route planning setting section.
Figure 16 is a flowchart showing the processing contents of the reference point switching judgment section.
Figure 17 is a functional block diagram showing the functions of an autonomous driving controller according to a fifth embodiment, together with related configurations.
Figure 18 is a flowchart showing the processing contents of the reference point correction amount calculation section.
Figure 19 is a flowchart showing the processing contents of the reference point switching judgment section.
Figure 20 is a flowchart showing the processing contents of the speed control command calculation section.

### Description of Embodiments

Hereinafter, embodiments of the present invention will be described with reference to the drawings. In the following description, a wheel loader is described as an example of an articulated vehicle, but the present invention is not limited to this and can be applied to other articulated work machines. Also, in the following description, when the same components exist in plurality, an alphabet may be added to the end of the numeral (number), but it is possible to omit the alphabet and collectively denote multiple components. For example, when there are a pair of left and right front wheels 5a, 5b, they may collectively be denoted as front wheels 5.

### <First Embodiment>

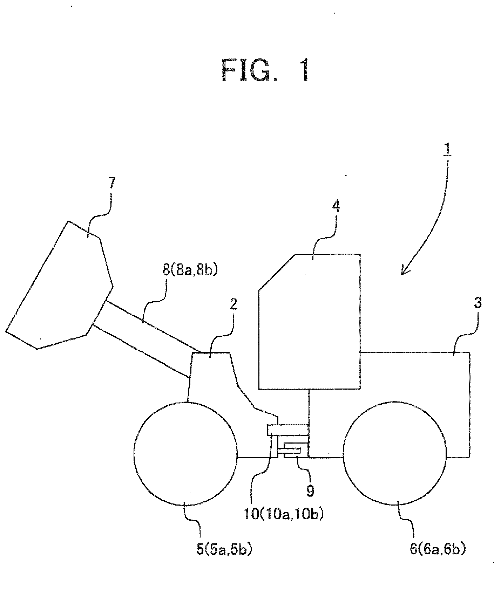

The first embodiment of the present invention will be described with reference to Figures 1 to 4.

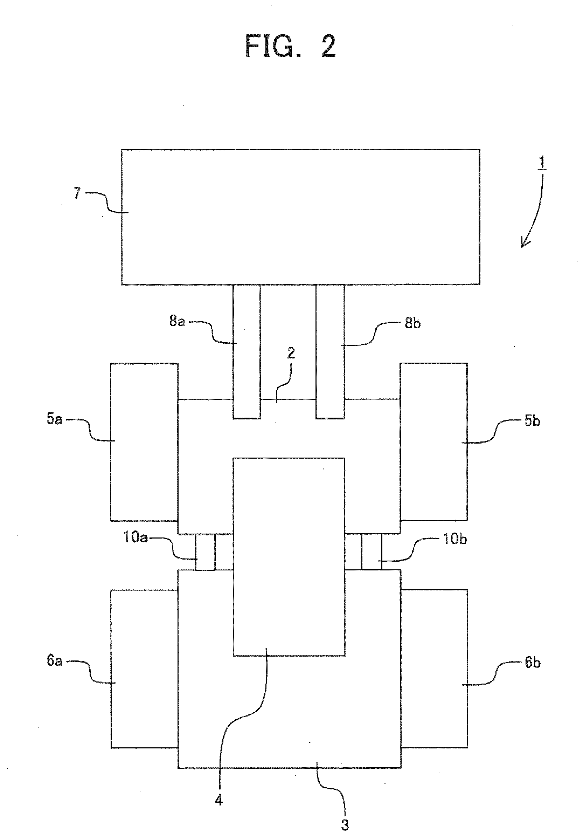

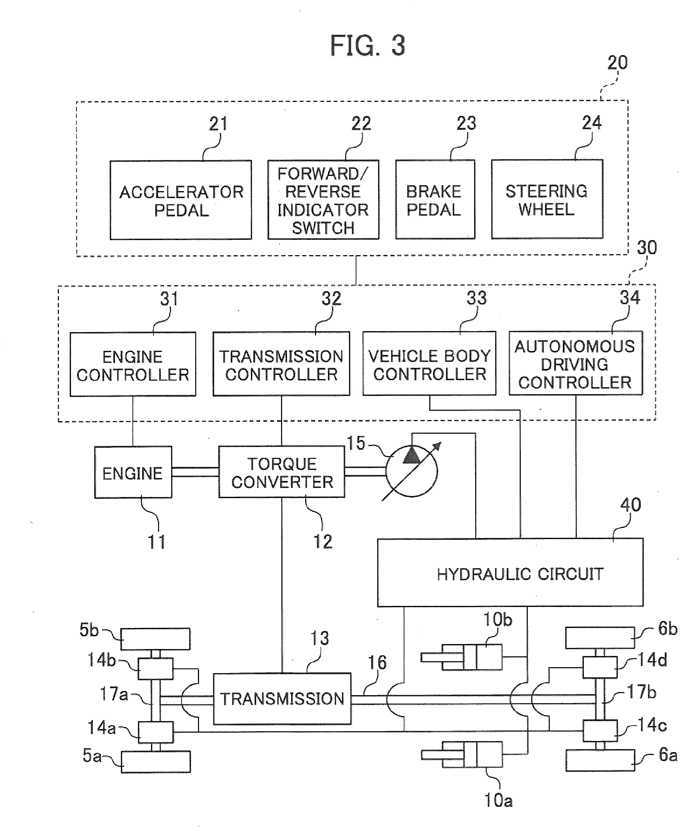

Figure 1 is a side view schematically showing a wheel loader according to this embodiment, and Figure 2 is a top view. Figure 3 is a diagram showing a travel drive system of the wheel loader together with a controller and related configurations. Unless otherwise specified in the following description, the front, rear, left, and right of the wheel loader 1 are based on the viewpoint of an operator operating the wheel loader 1.

In Figures 1 and 2, the wheel loader 1 is composed of a front frame 2 and a rear frame 3. The front frame 2 is equipped with a pair of left and right lift arms 8 and a bucket 7, as well as a pair of left and right wheels (front wheels 5a, 5b). The rear frame 3 is equipped with a cab 4 for the operator to board and a pair of left and right wheels (rear wheels 6a, 5b). The front frame 2 and the rear frame 3 are rotatably connected in the left and right direction by a center pin 9. Furthermore, the front frame 2 and the rear frame 3 are connected by a pair of left and right steering cylinders 10a, 10b.

The front wheels 5a, 5b, and the rear wheels 6a, 6b are drive wheels that rotate by the power transmitted from the engine 11 (see later Figure 3). A pair of left and right lift arms 8a, 8b are mounted on the front end of the front frame 2 of the wheel loader 1, spaced apart in the width direction (left and right direction). Also, the bucket 7 is rotatably connected to the front ends of the pair of left and right lift arms 8a, 8b in the vertical direction, and the rear ends are rotatably connected to the front end of the front frame 2 in the vertical direction. By extending one of the pair of left and right steering cylinders 10a, 10b while retracting the other, the front frame 2 and the rear frame 3 are bent in the left and right direction around the center pin 9.

In Figure 3, the wheel loader 1 is schematically composed of an engine 11, a torque converter 12, a transmission 13, brakes 14, a hydraulic pump 15, a drive shaft 16, axle shafts 17, an operating device 20, a controller 30, and a hydraulic circuit 40.

The engine 11 is, for example, a prime mover that generates driving force by burning fossil fuel.

The torque converter 12 is connected between the output shaft of the engine 11 and the input shaft of the transmission 13, and adjusts the driving force transmitted from the engine 11 to the transmission 13. That is, it transmits a part of the driving force of the engine 11 to the transmission 13.

The transmission 13 changes the speed of the driving force transmitted through the torque converter 12 from the engine 11, and transmits the changed driving force to the drive wheels (front wheels 5a, 5b and rear wheels 6a, 6b) via the drive shaft 16 and the axle shafts 17. Furthermore, the transmission 13 can switch between a forward state, which rotates the drive wheels in the direction to move the wheel loader 1 forward, and a reverse state, which rotates the drive wheels in the direction to move the wheel loader 1 backward.

The brakes 14a, 14b, 14c, 14d brake the rotation of the front wheels 5a, 5b and the rear wheels 6a, 6b. The brakes 14 are provided at four locations corresponding to each wheel to brake the front wheels 5a, 5b and the rear wheels 6a, 6b respectively.

The hydraulic pump 15 is driven by being connected to the output shaft of the engine 11. The hydraulic pump 15 pumps the hydraulic oil stored in the hydraulic oil tank (not shown) into the hydraulic circuit 40 by the driving force transmitted from the engine 11.

The hydraulic circuit 40 is composed of, for example, a direction switching valve, and controls the flow rate and direction of the hydraulic oil supplied from the hydraulic pump 15 to the hydraulic actuators (brakes 14, steering cylinders 10a, 10b) according to the operation signals output from the operating device 20 or the control signals output from the controller 30.

The operation device 20 operates the wheel loader 1 by outputting an operation signal to the controller 30 in response to the operator's operation. The operation device 20 includes, for example, an accelerator pedal 21, a forward/reverse indication switch 22, a brake pedal 23, and a steering wheel 24.

The accelerator pedal 21 adjusts the rotation speed of the engine 11 according to the operator's operation. The accelerator pedal 21 outputs an operation signal indicating the amount of depression by the operator to the controller 30.

The forward/reverse indication switch 22 is an alternate switch that indicates the direction of travel state of the wheel loader 1 according to the operator's operation. For example, when the forward/reverse indication switch 22 is switched to the forward position, the transmission 13 is switched to the forward state. When the forward/reverse indication switch 22 is switched to the reverse position, the transmission 13 is switched to the reverse state. The forward/reverse indication switch 22 outputs an operation signal indicating the current position to the controller 30.

The brake pedal 23 adjusts the braking force of the brakes 14 according to the operator's operation. The brake pedal 23 outputs an operation signal indicating the amount of depression by the operator to the controller 30.

The steering wheel 24 extends and retracts the steering cylinders 10a, 10b according to the operator's operation. For example, when the operator rotates the steering wheel 24 to the right (clockwise), the left steering cylinder 10a extends, and the right steering cylinder 10b retracts, causing the front frame 2 to bend to the right relative to the rear frame 3. Conversely, when the operator rotates the steering wheel 24 to the left (counterclockwise), the left steering cylinder 10a retracts, and the right steering cylinder 10b extends, causing the front frame 2 to bend to the left relative to the rear frame 3. The steering wheel 24 outputs an operation signal indicating the direction of rotation and the amount of rotation to the controller 30.

The controller 30 controls the operation of the wheel loader 1 based on the operation signals output from the operation device 20 and detection signals output from various sensors described later. Although not shown, the controller 30 includes a CPU (Central Processing Unit), ROM (Read Only Memory), and RAM (Random Access Memory). The controller 30 realizes various functional blocks described later by reading and executing program codes stored in the ROM by the CPU. The RAM is used as a work area when the CPU executes programs. However, the specific configuration of the controller 30 is not limited to this and may be realized by other hardware.

The controller 30 includes, for example, an engine controller 31, a transmission controller 32, a vehicle body controller 33, and an autonomous driving controller 34. For example, the engine controller 31, the transmission controller 32, and the vehicle body controller 33 may each be independent hardware, capable of intercommunication via a CAN (Controller Area Network). As another example, the engine controller 31, the transmission controller 32, and the vehicle body controller 33 may be interconnected for communication. The transmission controller 32 and the vehicle body controller 33 may be configured to execute each programs stored in the ROM by the CPU.

The engine controller 31 increases or decreases the rotation speed of the engine 11 in accordance with an operation signal indicating the depression amount of the accelerator pedal 21. The transmission controller 32 switches the state of the transmission 13 between a forward state and a reverse state in accordance with an operation signal indicating the position of the forward/reverse switch 22. The vehicle body controller 33 controls the braking force of the brakes 14 in accordance with an operation signal indicating the depression amount of the brake pedal 23.

### (Autonomous Driving Controller 34)

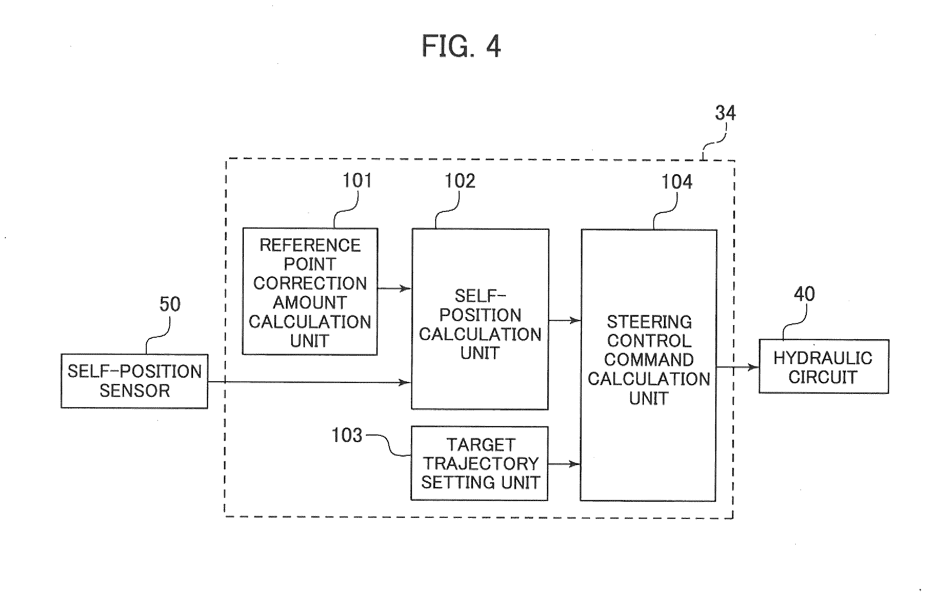

FIG. 4 is a functional block diagram showing the functions of the autonomous driving controller together with related configurations.

In FIG. 4, the autonomous driving controller 34 has a reference point correction amount calculation unit 101, a self-position calculation unit 102, a target trajectory setting unit 103, and a steering control command calculation unit 104. The autonomous driving controller 34 controls the autonomous driving (including operator assistance) of the wheel loader 1. The autonomous driving controller 34 controls the operation of the hydraulic circuit 40 based on the detection signal output from the self-position sensor 50, thereby controlling the operation of steering cylinders 10a, 10b and brakes 14a, 14b, 14c, 14d, etc.

The self-position sensor 50 detects the self-position of the body of the wheel loader 1 and outputs it as self-position information to the self-position calculation unit 102. The self-position sensor 50 is, for example, a Global Navigation Satellite System (GNSS), and outputs the current latitude and longitude coordinates as positioning results. The self-position sensor 50 is not limited to this and may be realized by other means. The self-position detected by the self-position sensor 50 is, for example, the position of the GNSS antenna installed on the wheel loader 1.

The reference point correction amount calculation unit 101 calculates the reference point correction amount to correct the self-position detected by the self-position sensor 50 to the position of the reference point set on the wheel loader 1, and outputs the calculated reference point correction amount to the self-position calculation unit 102.

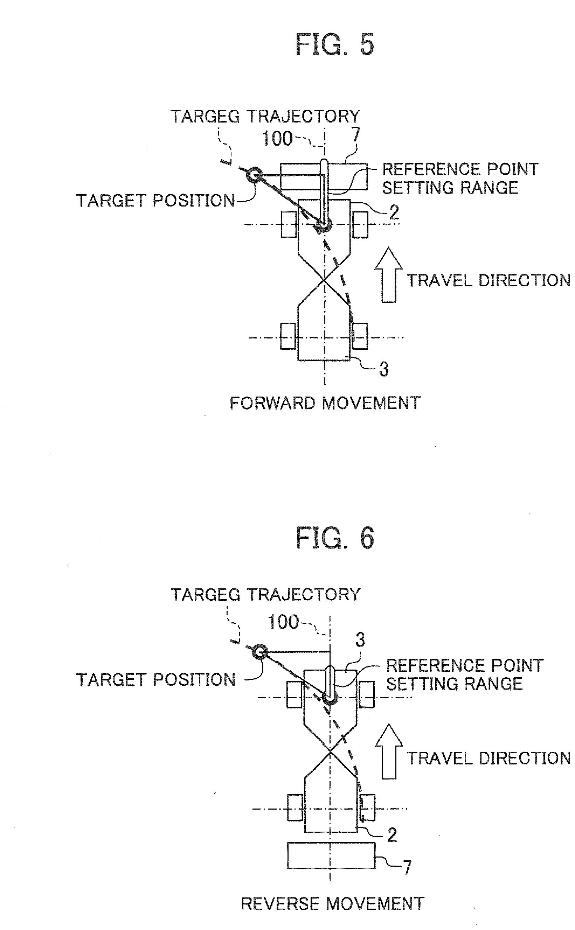

FIGS. 5 and 6 are diagrams showing examples of setting the reference point relative to the vehicle body. FIG. 5 shows an example of setting the reference point during forward movement, and FIG. 6 shows an example of setting the reference point during reverse movement.

As shown in FIG. 5, when the wheel loader 1 moves forward, the front frame 2 becomes the front (direction of travel side), and the rear frame 3 becomes the rear. At this time, the reference point is set at the center in the left-right direction of the frame located at the front (direction of travel side), namely, the front frame 2. More specifically, the reference point is set on a line 100 that runs vertically to the axle shafts 17a, 17b of the wheels (front wheels 5a, 5b) of the frame on the direction of travel side (front frame 2), and between the axle of the front wheels 5a, 5b and the tip of the bucket 7.

As shown in FIG. 6, when the wheel loader 1 moves backward, the rear frame 3 becomes the front (direction of travel side), and the front frame 2 becomes the rear. At this time, the reference point is set at the center in the left-right direction of the frame located at the front (direction of travel side), namely, the rear frame 3. More specifically, on a straight line 100 that passes through the front-rear direction perpendicularly to the axle, at the center of the left and right of the axle of the wheels (rear wheels 6a, 6b) of the frame on the direction side among the front frame 2 and the rear frame 3 (the rear frame 3), a reference point is set between the axle of the rear wheels 6a, 6b and the rear end of the rear frame 3 (the end part on the direction side).

The self-position calculation unit 102 calculates the position of the reference point at the work site (i.e., the coordinate position in the work site coordinate system or the earth coordinate system) based on the signal from the self-position sensor 50 (self-position information) and the calculation result of the reference point correction amount calculation unit 101 (reference point correction amount), and outputs it to the steering control command calculation unit 104.

The target trajectory setting unit 103 sets a target trajectory for driving the wheel loader 1 and sets a target position on the target trajectory to output to the steering control command calculation unit 104. The target trajectory setting unit 103, for example, forms a target trajectory by arranging multiple target coordinates in advance and outputs one of the target coordinates on the target trajectory as the target position. The method of setting the target trajectory and target position by the target trajectory setting unit 103 is not limited to this and may be realized using other methods.

The steering control command calculation unit 104 calculates the bending angle of the vehicle body as a steering control amount based on the position of the reference point from the self-position calculation unit 102 and the target position from the target trajectory setting unit 103, and outputs it as a control command to the hydraulic circuit 40. That is, the control command output from the steering control command calculation unit 104 is a command that controls the direction switching valve that controls the direction and flow rate of the hydraulic oil supplied to the steering cylinders 10a, 10b.

Here, the bending angle of the vehicle body is the bending amount between the front frame 2 and the rear frame 3. When the axle of the front wheels 5a, 5b and the axle of the rear wheels 6a, 6b are parallel, that is, when the front frame 2 and the rear frame 3 are straight, the bending angle becomes 0 (zero). For example, assuming a turning drive of the wheel loader 1 such that the reference point passes through the target position, the calculation of the bending angle of the vehicle body by the steering control command calculation unit 104 is performed by taking the angle formed by the line connecting the turning center position and the target position and the line connecting the turning center position and the position of the reference point, that is, the angle at the turning center position as the bending angle of the vehicle body. However, the method of calculating the bending angle by the steering control command calculation unit 104 is not limited to this and may be realized using other methods.

The effects of the embodiment configured as described above are explained.

In an articulated vehicle, when the reference point of the self-position is located behind the center of the axle of the frame on the front side in the direction of travel, there is a problem that if the vehicle is controlled to follow the rear side of the frame on the front side in the direction of travel, steering control intervention is delayed in response to deviation from the target route, resulting in meandering. Moreover, when control is performed to maintain the direction of the vehicle body parallel to the running target route, errors in the position of the vehicle body relative to the running target route are tolerated within the allowable range of position deviation, resulting in a problem of reduced tracking accuracy to the target route.

In contrast, in this embodiment, for an articulated vehicle such as the wheel loader 1, the reference point is set on a line that passes perpendicularly through the axle of the wheel of the frame on the travel direction side among the front frame 2 and the rear frame 3, and is centered between the left and right sides of the axle, and is set either on the axle or on the travel direction side of the axle. The position of the reference point at the worksite is calculated based on the detection results of a self-position sensor. Based on the predetermined target trajectory as the travel trajectory of the wheel loader 1 and the position of the reference point at the worksite, the steering control amount, which is the amount of bending of the front frame 2 relative to the rear frame 3, is calculated. As a result, the distance from the center of the left and right of the wheel's axle of the frame located on the advancing direction side (front) (either the front frame 2 or the rear frame 3) to the target trajectory becomes equal to or less than the distance from the center of the left and right of the wheel's axle of the frame located on the opposite side of the advancing direction (rear) (either the front frame 2 or the rear frame 3) to the target trajectory. Therefore, the frame located on the advancing direction side (front) can follow the target trajectory without meandering against it. That is, it is possible to suppress meandering while improving the accuracy of following the target route.

### <Second Embodiment>

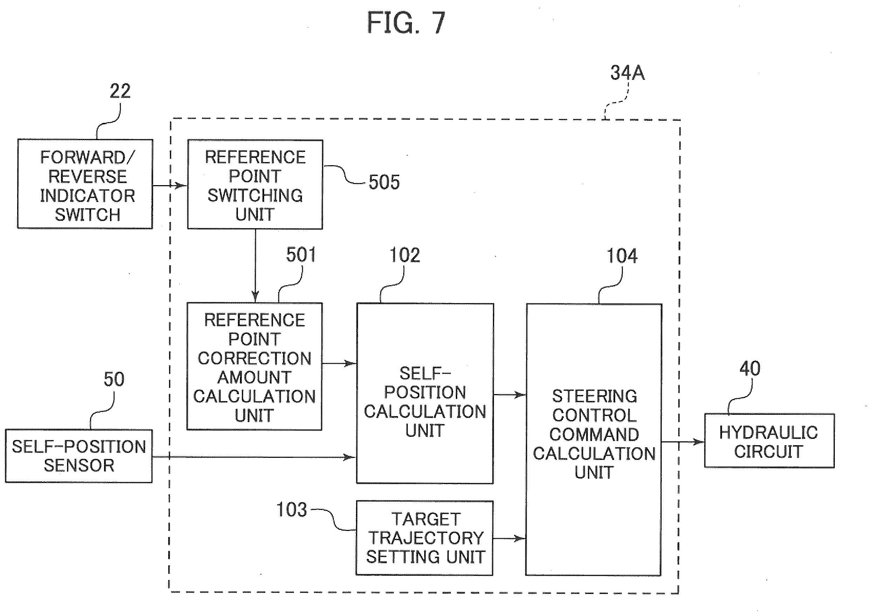

The second embodiment of the present invention will be described with reference to FIGS. 7 to 9.

The wheel loader of this embodiment is configured to set a reference point of the wheel loader according to the direction of travel indicated by a forward/reverse direction instruction switch, which can be switched by an operator. It should be noted that, in this embodiment, the same reference numerals are assigned to the same configurations as in the first embodiment, and the description thereof is omitted.

FIG. 7 is a functional block diagram showing the functions of an autonomous driving controller related to this embodiment, along with its related configurations.

In FIG. 7, the autonomous driving controller 34A includes a reference point switching unit 505, a reference point correction amount calculation unit 501, a self-position calculation unit 102, a target trajectory setting unit 103, and a steering control command calculation unit 104.

The reference point switching unit 505 receives an operation signal from the forward/reverse direction instruction switch 22, determines whether the transmission 13 is in a forward or reverse state, and outputs the determination result to the reference point correction amount calculation unit 501.

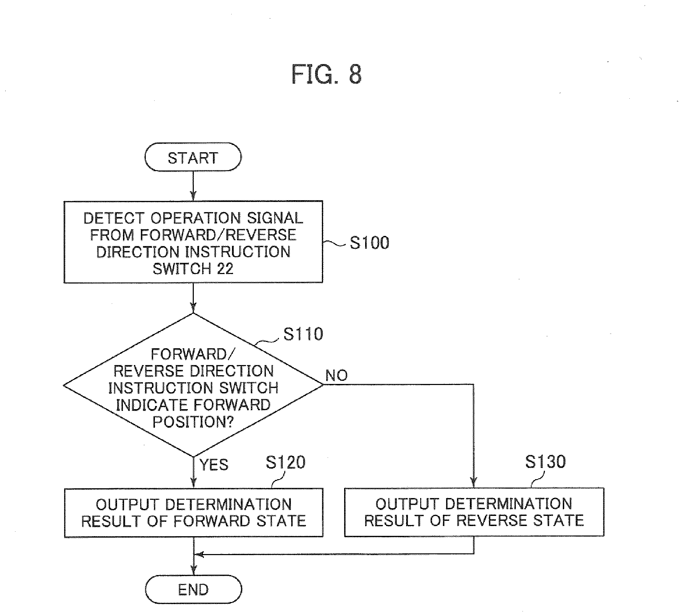

FIG. 8 is a flowchart showing the processing content of the reference point switching unit.

In FIG. 8, the reference point switching unit 505 of the autonomous driving controller 34A, upon detecting an operation signal from the forward/reverse direction instruction switch 22 (step S100), determines whether the detected operation signal from the forward/reverse direction instruction switch 22 indicates a forward position (step S110).

If the determination result at step S110 is YES, the reference point switching unit 505 outputs a determination result that the transmission 13 is in a forward state to the reference point correction amount calculation unit 501 (step S120) and ends the process.

If the determination result at step S110 is NO, the reference point switching unit 505 outputs a determination result that the transmission 13 is in a reverse state to the reference point correction amount calculation unit 501 (step S130) and ends the process.

The reference point correction amount calculation unit 501 calculates a reference point correction amount based on the determination result from the reference point switching unit 505, that is, whether the transmission 13 is in a forward or reverse state, and outputs the calculated reference point correction amount to the self-position calculation unit 102.

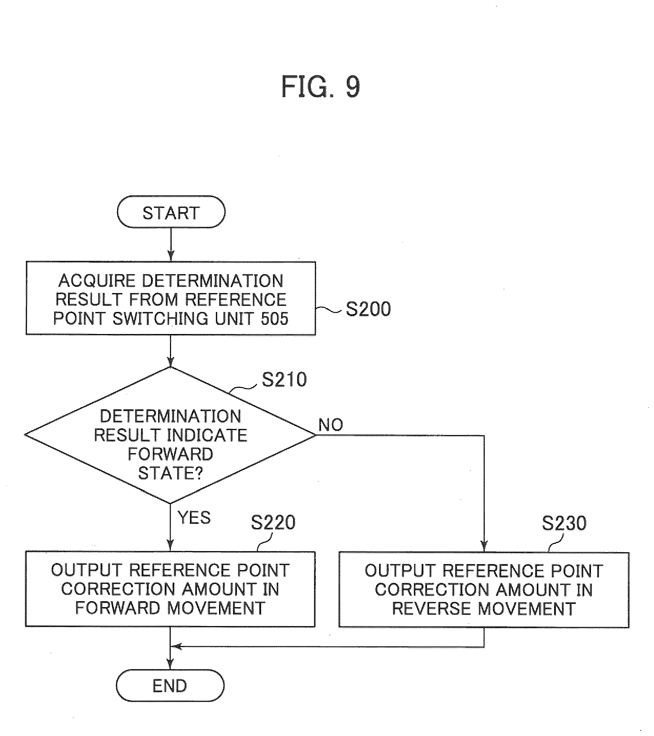

FIG. 9 is a flowchart showing the processing content of the reference point correction amount calculation unit.

In FIG. 9, the reference point correction amount calculation unit 501 of the autonomous driving controller 34 first acquires the determination result from the reference point switching unit 505 (step S200), and then determines whether the determination result indicates a forward state (step S210).

If the determination result at step S210 is YES, the reference point correction amount calculation unit 501 outputs a forward reference point correction amount, that is, a reference point correction amount for setting a reference point between the front axle of the front wheels 5 on the front frame 2 in the direction of travel and the tip of the bucket 7, along a line perpendicular to the axle and passing through the center of the left and right sides of the front axle, to the self-position calculation unit 102 (step S220), and ends the process.

If the determination result at step S210 is NO, the reference point correction amount calculation unit 501 calculates a reverse reference point correction amount, that is, a reference point correction amount for setting a reference point on a line perpendicular to the axle and passing through the center of the left and right sides of the rear axle of the rear wheels 6 on the rear frame 3 in the direction of travel, in a straight line, when setting a reference point between the axle of the rear wheel 6 and the rear end of the rear frame 3 (the end on the direction of travel side), the amount of correction for the reference point is output to the self-position calculation unit 102 (step S230), and the process is terminated.

Other configurations are the same as in the first embodiment.

In this embodiment, as in the first embodiment, the same effects can be obtained.

Furthermore, since the reference point is corrected (switched) according to the operation of the forward/reverse instruction switch 22 by the operator, it is possible to more reliably improve the accuracy of following the target route while suppressing meandering.

### <Third Embodiment>

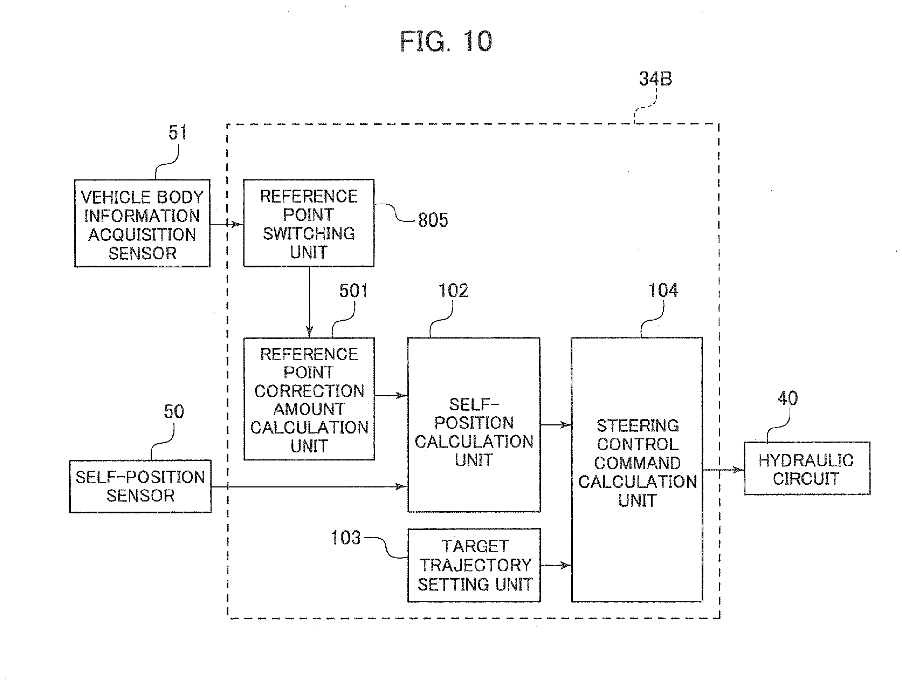

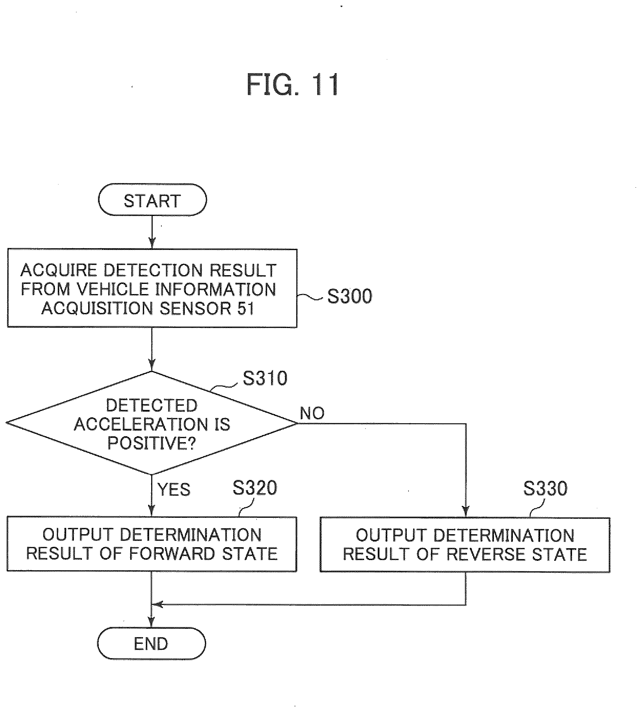

The third embodiment of the present invention will be described with reference to FIGS. 10 and 11.

The wheel loader of this embodiment is configured to set the reference point of the wheel loader according to the detection result from the vehicle information acquisition sensor that detects the vehicle information (acceleration direction) for detecting the direction of travel (forward, reverse) of the vehicle. The same reference numerals are assigned to the same configurations as in the first and second embodiments, and the description thereof is omitted.

FIG. 10 is a functional block diagram showing the functions of the autonomous driving controller related to this embodiment, together with the related configuration.

In FIG. 10, the autonomous driving controller 34B has a reference point switching unit 805, a reference point correction amount calculation unit 501, a self-position calculation unit 102, a target trajectory setting unit 103, and a steering control command calculation unit 104.

The reference point switching unit 805 determines whether the transmission 13 is in a forward or reverse state according to the detection result from the vehicle information acquisition sensor 51 and outputs the determination result to the reference point correction amount calculation unit 501.

The vehicle information acquisition sensor 51 is, for example, a device capable of detecting acceleration, such as an Inertial Measurement Unit (IMU). The vehicle information acquisition sensor 51 is installed in the wheel loader 1 to detect a positive acceleration when the wheel loader 1 is moving forward (i.e., in the direction of the front frame 2) and to detect and output a negative acceleration when moving backward (i.e., in the direction of the rear frame 3). However, the configuration of the vehicle information acquisition sensor 51 is not limited to this and may be realized by other means. For example, as a sensor for detecting the direction of travel of the wheel loader 1, the following can be used depending on the type of travel device: a rotation sensor built into the transmission for vehicles equipped with a torque converter type transmission, a resolver of an electric motor for electric vehicles that travel with the driving force of an electric motor, or a tilt angle sensor of a hydraulic pump and hydraulic motor for HST vehicles composed of a hydraulic pump and hydraulic motor. It is also possible to receive the direction of travel from a controller for the travel device, which is provided separately.

FIG. 11 is a flowchart showing the processing content of the reference point switching unit.

In FIG. 11, the reference point switching unit 805 of the autonomous driving controller 34A acquires the detection result from the vehicle information acquisition sensor 51 (step S300), and then determines whether the detected acceleration is positive or negative (Step S310).

If the determination result at Step S310 is YES, that is, if it is determined that the acceleration is positive and the wheel loader 1 is moving towards the front frame 2 side, then the reference point switching unit 805 outputs a determination result that the transmission 13 is in a forward state to the reference point correction amount calculation unit 501 (Step S320), and the process is terminated.

If the determination result at Step S310 is NO, that is, if it is determined that the acceleration is negative and the wheel loader 1 is moving towards the rear frame 3 side, then the reference point switching unit 805 outputs a determination result that the transmission 13 is in a reverse state to the reference point correction amount calculation unit 501 (Step S330), and the process is terminated.

The reference point correction amount calculation unit 501 calculates the reference point correction amount based on the determination result from the reference point switching unit 805, that is, whether the transmission 13 is in a forward or reverse state, and outputs the calculated reference point correction amount to the self-position calculation unit 102.

Other configurations are the same as those in the first and second embodiments.

Thus, in this embodiment, the same effects as in the first and second embodiments can be obtained.

Moreover, since the reference point is corrected (switched) based on the detection result of the vehicle body information acquisition sensor 51 due to the travel of the wheel loader 1, it is possible to more reliably improve the tracking accuracy to the target route while suppressing meandering.

### <Fourth Embodiment>

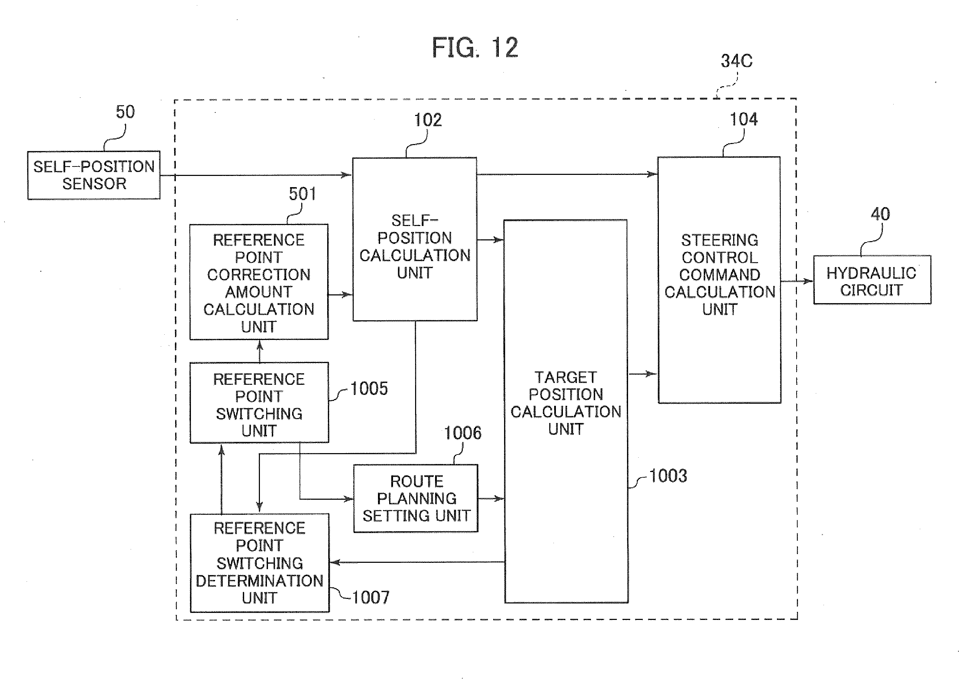

The fourth embodiment of the present invention will be described with reference to FIGS. 12 to 16.

The wheel loader of this embodiment is configured to set the reference point of the wheel loader 1 according to the determined direction of travel based on the position of the reference point at the work site and the target position, and to switch the route planning according to the position of the reference point in the articulated vehicle when the reference point is changed. The same reference numerals are used for the same configurations as in the first to third embodiments, and the description thereof is omitted.

FIG. 12 is a functional block diagram showing the functions of the autonomous driving controller of this embodiment, together with related configurations.

In FIG. 12, the autonomous driving controller 34C includes a reference point switching unit 1005, a route planning setting unit 1006, a reference point switching determination unit 1007, a reference point correction amount calculation unit 501, a self-position calculation unit 102, a target position calculation unit 1003, and a steering control command calculation unit 104.

The target position calculation unit 1003 calculates the target position based on the position of the reference point from the self-position calculation unit 102 and the route planning from the route planning setting unit 1006, and outputs the calculation result to the steering control command calculation unit 104 and the reference point switching determination unit 1007.

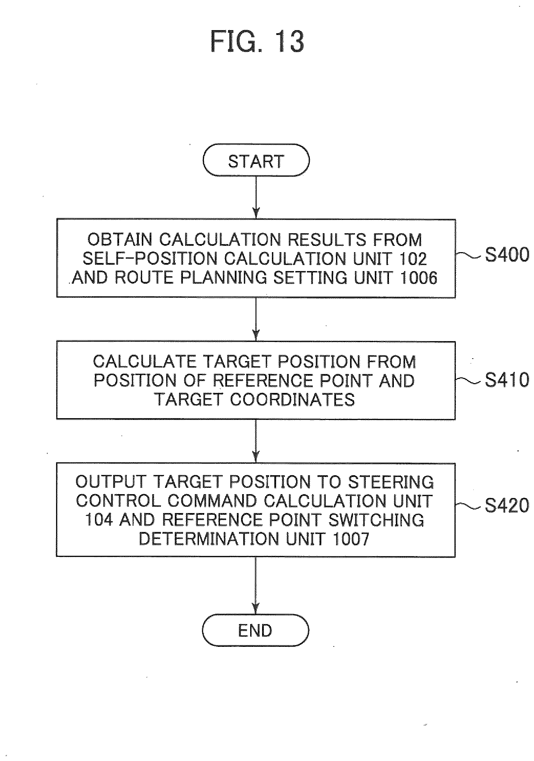

FIG. 13 is a flowchart showing the processing content of the target position calculation unit.

In FIG. 13, the target position calculation unit 1003 of the autonomous driving controller 34C first obtains calculation results from the self-position calculation unit 102 and the route planning setting unit 1006 (Step S400), and calculates the target position from the position of the reference point from the self-position calculation unit 102 and the target coordinates from the route planning of the route planning setting unit 1006 (Step S410). Calculation of the target position in the target position calculation unit 1003 is performed, for example, by interpolating the path with a spline function based on the current reference point position and the current target coordinates, and setting the position reached by moving a fixed distance along the interpolated path from the current reference point position as the target position. However, the method of calculating the target position is not limited to this and may be configured to be realized using other methods.

Upon completion of the processing in step S410, the target position calculation unit 1003 outputs the calculated target position to the steering control command calculation unit 104 and the reference point switching determination unit 1007 (step S420) and the process is terminated.

The reference point switching unit 1005 receives the determination result from the reference point switching determination unit 1007 and judges whether the wheel loader 1 is in a forward or reverse state. The reference point switching unit 1005 outputs the judged result to the reference point correction amount calculation unit 501. The reference point switching determination unit 1007 determines whether the direction of travel of the wheel loader 1 has been switched based on the position of the reference point from the self-position calculation unit 102 and the target position from the target position calculation unit 1003, and outputs the travel state of the wheel loader 1 as the determination result. Details of the processing will be described later.

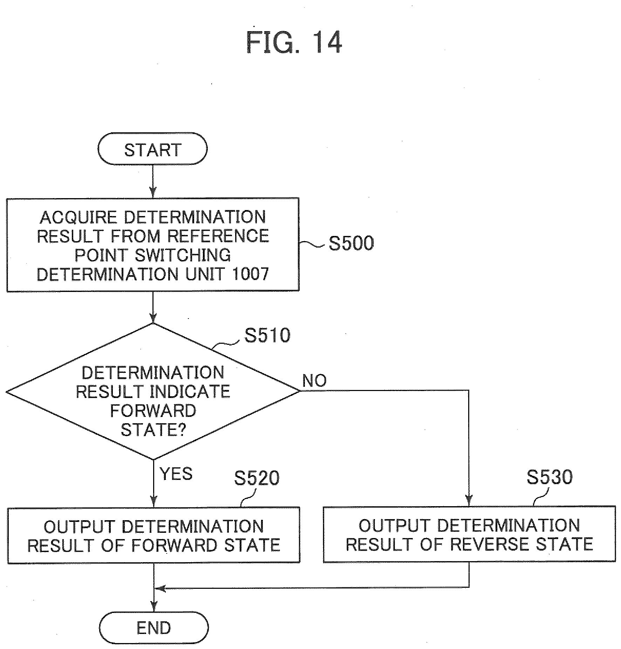

Figure 14 is a flowchart showing the processing content of the reference point switching unit.

In Figure 14, the reference point switching unit 1005 of the autonomous driving controller 34C acquires the determination result from the reference point switching determination unit 1007 (step S500) and judges whether the acquired determination result indicates a forward state (step S510).

If the determination result at step S510 is YES, the reference point switching unit 1005 outputs the determination result that the wheel loader 1 is in a forward state (in other words, the transmission 13 is in a forward state) to the reference point correction amount calculation unit 501 (step S520) and the process is terminated.

If the determination result at step S510 is NO, the reference point switching unit 1005 outputs the determination result that the wheel loader 1 is in a reverse state (in other words, the transmission 13 is in a reverse state) to the reference point correction amount calculation unit 501, and the process is terminated (step S530).

The route planning setting unit 1006 sets the route planning to be output to the target position calculation unit 1003 based on the determination result from the reference point switching unit 1005. The route planning to be output to the target position calculation unit 1003 sets the target trajectory for driving the wheel loader 1. For example, the target trajectory is constructed by sequentially arranging the target coordinates from the starting position to the target arrival position. Moreover, since the route planning setting unit 1006 determines the target coordinates based on the position of the reference point, it has different route plans for forward and reverse travel in the wheel loader 1. The route plan for forward travel is composed of target coordinates based on the reference point in the forward state, and the route plan for reverse travel is composed of target coordinates based on the reference point in the reverse state. However, the configuration of the route planning setting unit 1006 is not limited to this and may be configured to be realized by other means.

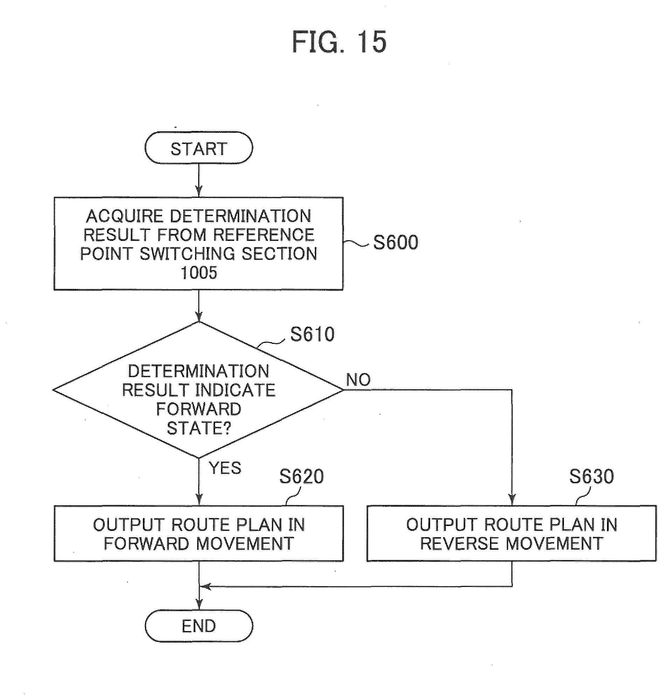

Figure 15 is a flowchart showing the processing content of the route planning setting unit.

In Figure 15, the route planning setting unit 1006 of the autonomous driving controller 34C acquires the determination result from the reference point switching section 1005 (step S600) and judges whether the acquired determination result indicates a forward state (step S610).

If the determination result at step S610 is YES, then the route planning setting section 1006 outputs a route plan corresponding to the reference point during the forward movement of the wheel loader 1 to the target position calculation section 1003 (step S520), and the process is terminated.

On the other hand, if the determination result at step S610 is NO, the route planning setting section 1006 outputs a route plan corresponding to the reference point during the reverse movement of the wheel loader to the target position calculation section 1003 (step S630), and the process is terminated.

The reference point switching determination section 1007 determines the change in the direction of travel of the wheel loader 1 based on the position of the reference point from the self-position calculation section 102 and the target position from the target position calculation section 1003, and outputs the determination result to the reference point switching section 1005. For example, if the initial state is set as the forward state, the reference point switching determination section 1007 outputs a determination result indicating a switch to the reverse state as the determination result when the direction of travel of the wheel loader 1 is switched to the reference point switching section 1005. Until the change in the direction of travel of the wheel loader 1 is determined, the reference point switching determination section 1007 outputs a determination result indicating the forward state to the reference point switching section 1005. However, the specific configuration of the reference point switching determination section 1007 is not limited to this and may be configured to be realized by other means.

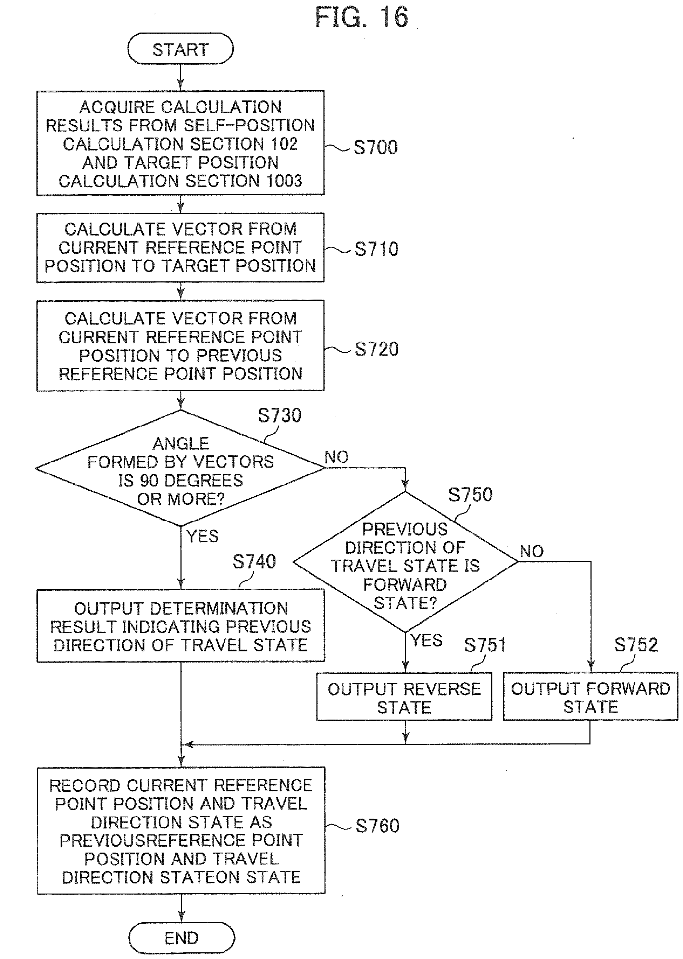

Figure 16 is a flowchart showing the processing content of the reference point switching determination section.

In Figure 16, the reference point switching determination section 1007 of the autonomous driving controller 34C acquires the calculation results from the self-position calculation section 102 and the target position calculation section 1003 (step S700). The reference point switching determination section 1007 calculates the vector from the current reference point position in the work site to the target position based on the acquired calculation results (step S710), and calculates the vector from the current reference point position in the work site to the position of the reference point at the previous time (step S720).

Subsequently, the reference point switching determination section 1007 determines whether the angle formed by the vectors calculated in steps S710 and S720 is 90 degrees or more (step S730). If the determination result is YES, the reference point switching determination section 1007 outputs the determination result indicating the previous direction of travel state (forward state or reverse state) to the reference point switching section 1005 (step S740), records the current reference point position and the direction of travel state in the work site (step S760), and the process is terminated The recorded current reference point position and direction of travel state will be used as the previous reference point position and travel direction state in the next determination process of the reference point switching determination section 1007.

If the determination result at step S730 is NO, the reference point switching determination section 1007 determines whether the previous direction of travel state was a forward state (step S750). If the determination result at step S750 is YES, the reference point switching determination section 1007 outputs a determination result indicating the reverse state to the reference point switching section 1005 (step S751) and proceeds to the process of step S760. If the determination result at step S750 is NO, the reference point switching determination unit 1007 outputs a determination result indicating a forward state to the reference point switching unit 1005 (step S752), and proceeds to the processing of step S760.

Other configurations are the same as those in the first and third embodiments.

As configured above, in this embodiment, the same effects as in the first to third embodiments can be obtained.

Furthermore, since it is configured to switch the reference point correction amount according to the route planning and the position of the reference point, the reference point in the wheel loader 1 is automatically corrected according to the direction of travel, thereby more reliably improving the accuracy of following the target route while suppressing meandering.

### <Fifth Embodiment>

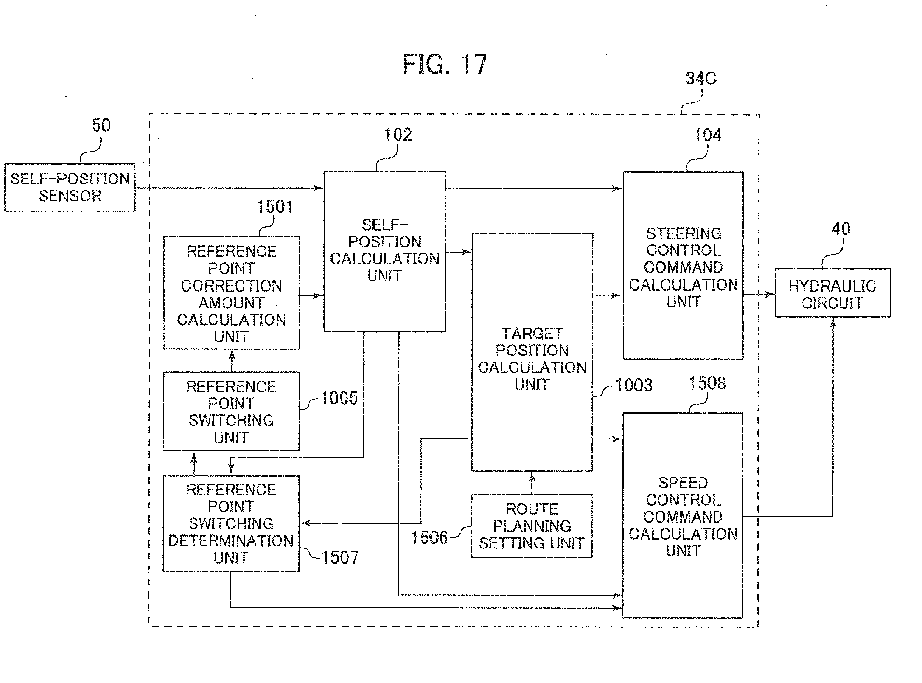

The fourth embodiment of the present invention will be described with reference to FIGS. 17 to 20.

In this embodiment of the wheel loader, when the position of the reference point on the vehicle body is changed, a speed control amount, which is a target traveling speed of the wheel loader at the work site, is calculated so that the distance between the target position and the position of the reference point at the work site becomes equal to or less than the distance between the target position before the change of the reference point and the position of the reference point at the said work site, and is configured to perform braking accordingly. The same reference numerals are used for the same configurations as in the first to fourth embodiments, and the description thereof is omitted.

FIG. 17 is a functional block diagram showing the functions of the autonomous driving controller related to this embodiment along with its related configurations.

In FIG. 17, the autonomous driving controller 34D includes a reference point switching section 1005, a reference point correction amount calculation section 1501, a route planning setting section 1506, a reference point switching determination section 1507, a speed control command calculation section 1508, a self-position calculation section 102, a target position calculation section 1003, and a steering control command calculation section 104.

The reference point correction amount calculation section 1501 calculates the reference point correction amount based on the determination result from the reference point switching section 1005, that is, depending on whether the wheel loader 1 (in other words, the transmission 13) is in a forward or reverse state, and outputs the reference point correction amount, which is the result of the calculation, to the self-position calculation section 102.

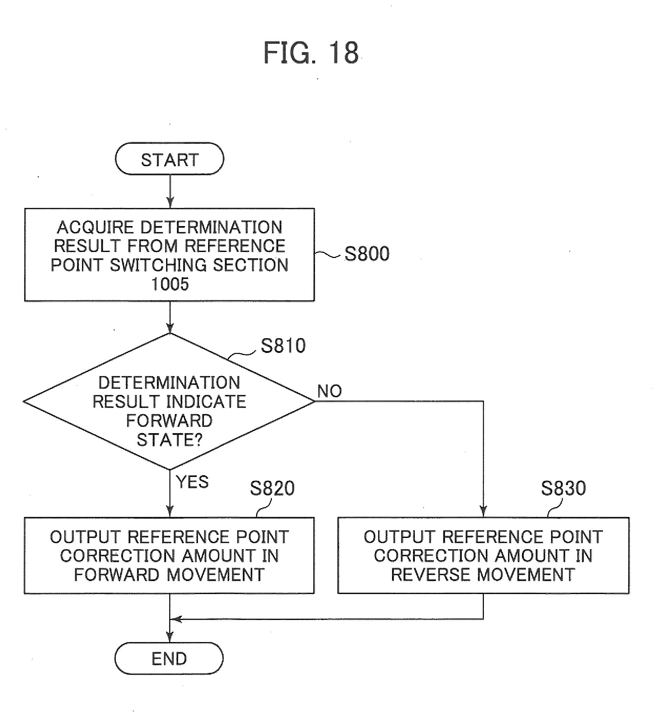

FIG. 18 is a flowchart showing the processing content of the reference point correction amount calculation section.

In FIG. 18, the reference point correction amount calculation section 1501 of the autonomous driving controller 34D first acquires the determination result from the reference point switching section 1005 (Step S800) and determines whether the determination result indicates a forward state (Step S810).

If the determination result at Step S810 is YES, the reference point correction amount calculation section 1501 outputs to the self-position calculation section 102 the reference point correction amount for forward movement, that is, the reference point correction amount for a when setting a reference point between the axle of the front wheel 5 of the front frame 2 on the advancing direction side and the tip of the bucket 7, on a line passing through the center of the left and right of the axle of the front wheel 5 perpendicularly to the axle in the front-rear direction (Step S820), and the process is terminated.

If the determination result at Step S810 is NO, the reference point correction amount calculation section 1501 calculates the reference point correction amount for reverse movement, that is, the reference point correction amount for a when setting a reference point between the axle of the rear wheel 6 of the rear frame 3 on the advancing direction side and the rear end of the rear frame 3 (the end on the direction of travel side), on a straight line passing through the center of the left and right of the axle of the rear wheel 6 perpendicularly to the axle in the front-rear direction the reference point set on the line passing perpendicularly through the center of the left and right sides of the rear axle of the rear wheels 6 in the front-rear direction on the travel direction side, from the rear axle of the rear wheels 6 to the rear end of the rear frame 3 (the end on the travel direction side), and outputs the reference point correction amount to the self-position calculation section 102 (Step S830), and the process is terminated.

The route planning setting section 1506 outputs the route plan to the target position calculation section 1003. The route plan output to the target position calculation section 1003 sets the target trajectory for driving the wheel loader 1. For example, the target trajectory is composed by sequentially arranging target coordinates from the starting position to the target arrival position. However, the specific configuration of the route planning setting section 1506 is not limited to this and may be realized by other means.

The reference point switching determination section 1507, based on the position of the reference point from the self-position calculation section 102 and the target position from the target position calculation section 1003, determines the change in the travel direction of the wheel loader 1 and outputs the determination result to the reference point switching section 1005. For example, if the initial state is set as the forward state, the reference point switching determination section 1507 outputs a determination result indicating a switch to the reverse state as a determination result when the travel direction of the wheel loader 1 is switched, to the reference point switching section 1005. At this time, the reference point switching determination section 1507 outputs a determination result indicating the forward state to the reference point switching section 1005 until the change in the travel direction of the wheel loader 1 is determined. However, the specific configuration of the reference point switching determination section 1507 is not limited to this and may be configured to be realized by other means.

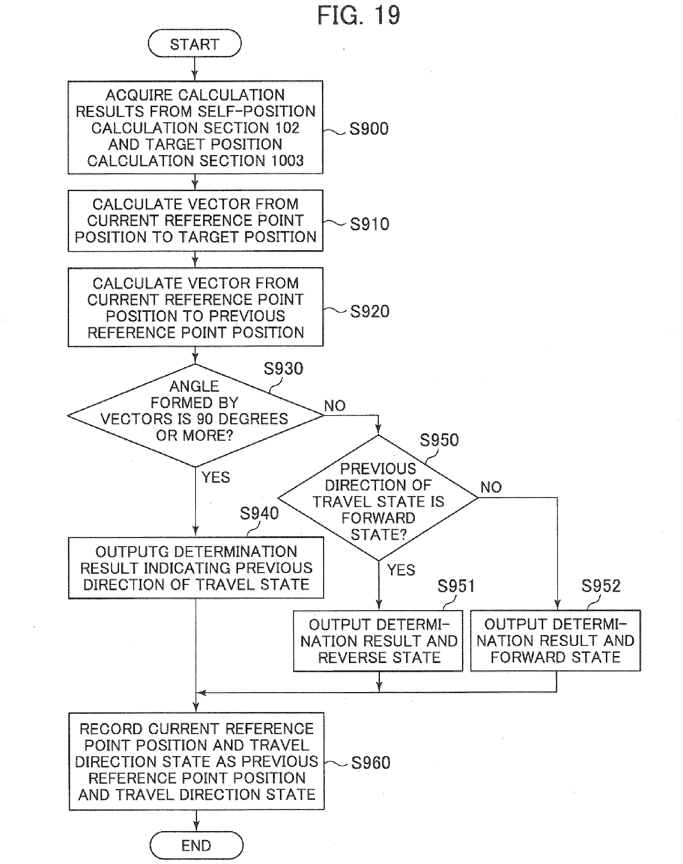

Figure 19 is a flowchart showing the processing content of the reference point switching determination section.

In Figure 19, the reference point switching determination section 1507 of the autonomous driving controller 34D acquires calculation results from the self-position calculation section 102 and the target position calculation section 1003 (Step S900). The reference point switching determination section 1507 calculates the vector from the current reference point position in the work site to the target position (Step S910), and calculates the vector from the current reference point position in the work site to the position of the previous reference point (Step S920) .

Subsequently, the reference point switching determination section 1507 determines whether the angle formed by the vectors calculated in Steps S910 and S920 is 90 degrees or not (Step S930). If the determination result is YES, the reference point switching determination section 1507 outputs the determination result indicating the previous travel direction state (forward state or reverse state) to the reference point switching section 1005 (Step S940), records the current reference point position and the travel direction state in the work site (Step S960), and the process is terminated. The recorded current reference point position and travel direction state will be used as the previous reference point position and travel direction state in the next determination process of the reference point switching determination section 1507.

If the determination result at Step S930 is NO, the reference point switching determination section 1507 determines whether the previous travel direction state was a forward state or not (Step S950). If the determination result at Step S950 is YES, the reference point switching determination section 1507 outputs a determination result indicating that the travel direction state has changed to the speed control command calculation section 1508, and outputs a determination result indicating the reverse state to the reference point switching section 1005 (Step S951), and proceeds to the processing of step S960. If the determination result at step S950 is NO, the reference point switching determination unit 1507 outputs a determination result indicating that the direction of progress has not changed to the speed control command calculation unit 1508, and outputs a determination result indicating a forward state to the reference point switching unit 1005 (step S952), and proceeds to the processing of step S960.

The speed control command calculation unit 1508 determines whether it is necessary to control the braking force of the vehicle body based on the position of the reference point from the self-position calculation unit 102, the target position from the target position calculation unit 1003, and the determination result from the reference point switching determination unit 1507, and calculates the necessary control command to output to the hydraulic circuit 40. The control command output to the hydraulic circuit 40 is, for example, a control command for a valve that supplies hydraulic oil to the brake shoes that clamp the brake disc, which rotates integrally with each drive wheel, by a pair of brake shoes. However, the specific configuration of the speed control command calculation unit 1508 and the brakes 14 are not limited to this and may be configured to be realized by other means.

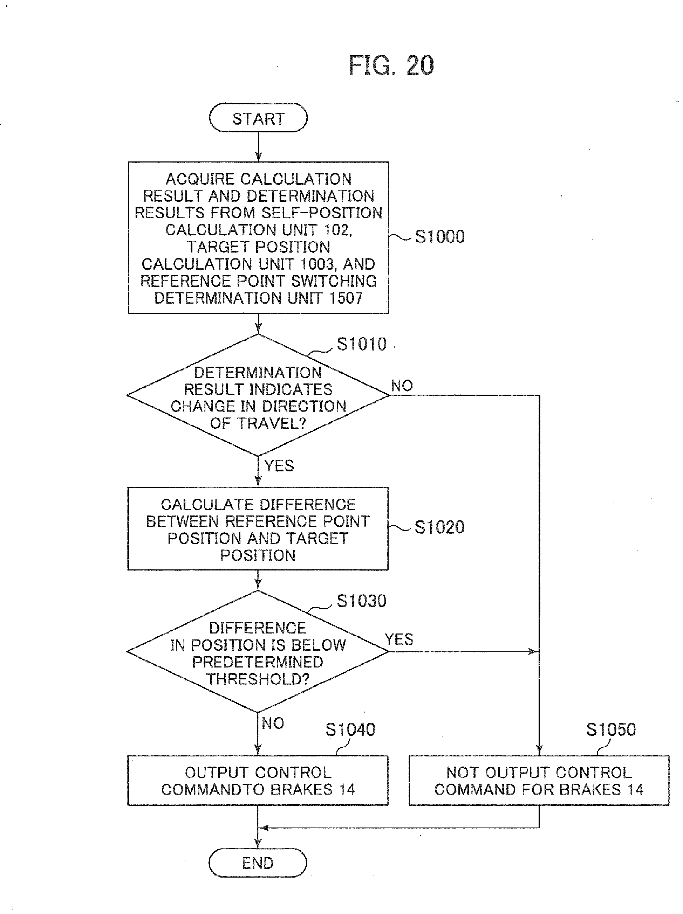

FIG. 20 is a flowchart showing the processing content of the speed control command calculation unit.

In FIG. 20, the speed control command calculation unit 1508 of the autonomous driving controller 34D acquires calculation results and determination results from the self-position calculation unit 102, the target position calculation unit 1003, and the reference point switching determination unit 1507 (step S1000), and determines whether the determination result indicates a change in the direction of travel (step S1010).

If the determination result at step S1010 is YES, the speed control command calculation unit 1508 calculates the difference between the position of the reference point obtained from the self-position calculation unit 102 and the target position obtained from the target position calculation unit 1003 (step S1020), and determines whether the difference in position is below a predetermined threshold (step S1030). The threshold may be set to a value such as 1m. However, a table of correction distances for the difference between the position of the reference point and the target position may be prepared in advance according to other characteristics, and the threshold may be determined based on this table.

If the determination result at step S1030 is NO, the speed control command calculation unit 1508 outputs a control command to the hydraulic circuit 40 to control a valve to supply hydraulic oil to the brake shoes to clamp the brake disc as a control command for the brakes 14 (step S1040), and the process is terminated. The amount of clamping of the brake disc by the brake shoes may be, for example, about half of the amount of depression of the brake pedal 23.

If the determination result at step S1010 is NO, or if the determination result at step S1030 is YES, the speed control command calculation unit 1508 does not output a control command for the brakes 14 (step S1050), and the process is terminated.

The configuration is the same as in the first to fourth embodiments.

In this embodiment configured as described above, the same effects as in the first to fourth embodiments can be obtained.

Furthermore, in the case of a forward state, it is possible to follow the target trajectory with the center of the bucket 7 as the reference point for the self-position from the left and right directions, and when the reference point is switched and the error with the target trajectory becomes large due to the change of the reference point, it is possible to travel in a state where the braking force by the brake 14 acts until the error can be absorbed. As a result, it is possible to suppress sudden movements of the wheel loader 1 due to the change of the reference point caused by the switching between forward and reverse, while improving the accuracy of following the target route more reliably and suppressing meandering.

### <Note>

It should be noted that the present invention is not limited to the embodiments described above, and includes various modifications and combinations within the scope that do not depart from the gist of the invention. Furthermore, the present invention is not limited to those having all the configurations described in the above embodiments, but also includes those from which some of the configurations have been omitted. Moreover, each of the configurations and functions described above may be implemented by, for example, designing them in an integrated circuit. Furthermore, each of the configurations and functions described above may be implemented in software by a processor interpreting and executing a program that realizes each function.

### Description of Reference Characters

- 1:: Wheel Loader
- 2:: Front Frame
- 3:: Rear Frame
- 4:: Cab
- 5:: Front Wheel
- 6:: Rear Wheel
- 7:: Bucket
- 8:: Lift Arm
- 9:: Center Pin
- 10:: Steering Cylinder
- 11:: Engine
- 12:: Torque Converter
- 13:: Transmission
- 14:: Brake
- 15:: Hydraulic Pump
- 16:: Drive Shaft
- 17:: Axle Shaft
- 20:: Operating Device
- 21:: Accelerator Pedal
- 22:: Forward/Reverse Indicator Switch
- 23:: Brake Pedal
- 24:: Steering Wheel
- 30:: Controller
- 31:: Engine Controller
- 32:: Transmission Controller
- 33:: Vehicle Body Controller
- 34 34A 34B 34C 34D:: Autonomous Driving Controller
- 40:: Hydraulic Circuit
- 50:: Self-Position Sensor
- 51:: Vehicle Body Information Acquisition Sensor
- 100:: Straight Line
- 101:: Reference Point Correction Amount Calculation Unit
- 102:: Self-Position Calculation Unit
- 103:: Target Trajectory Setting Unit
- 104:: Steering Control Command Calculation Unit
- 501:: Reference Point Correction Amount Calculation Unit
- 505:: Reference Point Switching Unit
- 805:: Reference Point Switching Unit
- 1003:: Target Position Calculation Unit
- 1005:: Reference Point Switching Unit
- 1006:: Route Planning Setting Unit
- 1007:: Reference Point Switching Determination Unit
- 1501:: Reference Point Correction Amount Calculation Unit
- 1506:: Route Planning Setting Unit
- 1507:: Reference Point Switching Determination Unit
- 1508:: Speed Control Command Calculation Unit

## Claims

1. An articulated vehicle comprising:
a front frame having a pair of left and right wheels; a rear frame having a pair of left and right wheels rotatably connected to the front frame in the left and right direction;
a self-position sensor for detecting the position at the work site; and
a controller for controlling the operation of the articulated vehicle, wherein
the controller is configured to;
set a reference point of the articulated vehicle on a straight line passing perpendicularly through the center of the left and right axles of the wheels of the frame on the advancing direction side of the front and rear frames, either on the axle or on the advancing direction side of the axle,
calculate the position of the reference point at the work site based on the detection result of the self-position sensor, and
calculate the steering control amount, which is the amount of bending of the front frame relative to the rear frame, based on the predetermined target trajectory as the travel trajectory of the articulated vehicle and the position of the reference point at the work site.

2. The articulated vehicle according to claim 1, wherein
the controller is configured to calculate the steering control amount so that the distance between the center of the left and right axles of the wheels of the frame on the advancing direction side of the front and rear frames and the target trajectory is equal to or less than the distance between the center of the axles of the wheels of the frame on the opposite side of the advancing direction and the target trajectory.

3. The articulated vehicle according to claim 1, further comprising a forward/reverse indication switch for indicating the advancing direction of the articulated vehicle, wherein
the controller is configured to set the reference point of the articulated vehicle according to the advancing direction indicated by the forward/reverse indication switch.

4. The articulated vehicle according to claim 1, further comprising a vehicle information acquisition sensor for detecting the advancing direction of the vehicle, wherein
the controller is configured to set the reference point of the articulated vehicle according to the advancing direction of the articulated vehicle determined based on the detection result of the vehicle' information acquisition sensor.

5. The articulated vehicle according to claim 2, wherein
the controller is configured to calculate a target position at the work site from a predetermined route plan and the position of the reference point at the work site, and sets the reference point of the articulated vehicle according to the advancing direction of the articulated vehicle determined based on the position of the reference point at the work site and the target position.

6. The articulated vehicle according to claim 5, wherein
the controller is configured to switch the route plan according to the position of the reference point in the articulated vehicle when the reference point is changed.

7. The articulated vehicle according to claim 5,
the controller is configured to, when the reference point is changed, calculate a speed control amount, which is a target traveling speed of the articulated vehicle at the work site, so that the distance between the target position and the position of the reference point at the work site is equal to or less than the distance between the target position before the change of the reference point and the position of the reference point at the work site.

8. The articulated vehicle according to claim 2, comprising
a pair of lift arms extended forward, positioned at locations spaced apart in the width direction and supported on the front frame so as to be able to raise and down, and
a bucket supported on the front end of the pair of lift arms so as to be able to tilt, wherein
the controller is configured to;
when the front frame side is the direction of travel, set the reference point of the articulated vehicle between the axle of the wheel of the front frame and the tip of the bucket, and
when the rear frame side is the direction of travel, set the reference point of the articulated vehicle between the axle of the wheel of the rear frame and the rear end of the rear frame.
